# EUROPEAN PATENT APPLICATION

(11) **EP 4 759 635 A1**
(43) Date of publication of application: **17.06.2026**
(21) Application number: 25215003.2
(22) Date of filing: 11.11.2025
(51) Int. Cl.: B60R 1/24, B60K 35/22, B60R 1/26

(54) **VEHICLE PERIPHERY IMAGE DISPLAY APPARATUS AND IMAGE DISPLAY METHOD FOR VEHICLE PERIPHERY IMAGE DISPLAY APPARATUS**

(30) Priority: 20.11.2024 JP 2024202126
(71) Applicant: Toyota Jidosha Kabushiki Kaisha, Toyota-shi, Aichi-ken 471-8571 (JP)
(72) Inventor: TAKAHASHI, Yuki, Toyota-shi, 471-8571 (JP)
(74) Representative: J A Kemp LLP

(57) **Abstract**

A vehicle periphery image display apparatus for displaying a right rear image, which is a captured image from a right rear camera that captures a right rear of a vehicle, on a display in a vehicle cabin, comprises a right display provided in the vehicle cabin in front of a driver's seat of the vehicle and on a right side as viewed from a driver at the driver's seat, and an image display unit for causing the right rear image to be displayed on the right display, wherein the image display unit causes a left front image, which is a captured image of a left front of the vehicle captured by a front camera of the vehicle, to be displayed on the right display together with the right rear image when the vehicle is making a right turn at an intersection.

## Description

### CROSS-REFERENCE TO RELATED APPLICATIONS

This application is based upon and claims the benefit of priority from Japanese Patent Application No. 2024-202126, filed on November 20, 2024, the entire contents of which are incorporated herein by reference.

### TECHNICAL FIELD

The present disclosure relates to a vehicle periphery image display apparatus and an image display method for a vehicle periphery image display apparatus.

### BACKGROUND

As a technical document related to a vehicle periphery image display apparatus, Japanese Unexamined Patent Application Publication No. 2020-037357 is known. This publication discloses a vehicle periphery display apparatus that displays an image captured of the surroundings of a vehicle on a monitor in a vehicle cabin, in which a rearside image of the vehicle is displayed in a wide-angle view in conjunction with the operation of the vehicle's direction indicator light and the vehicle speed.

### SUMMARY

By the way, when making a right or left turn at an intersection, a driver needs to check multiple directions, and further technological development is required to support the driver's confirmation of the situation around the vehicle.

One aspect of the present disclosure is a vehicle periphery image display apparatus that displays a right rear image, which is a captured image from a right rear camera that captures the right rear of a vehicle, on a display in a vehicle cabin. The vehicle periphery image display apparatus includes a right display provided in front of the driver's seat of the vehicle in the vehicle cabin and provided on the right side as viewed from the driver at the driver's seat, and an image display unit that causes the right rear image to be displayed on the right display. The image display unit causes a left front image, which is a captured image of the left front of the vehicle captured by a front camera of the vehicle, to be displayed on the right display together with the right rear image when the vehicle is making a right turn at an intersection.

According to the vehicle periphery image display apparatus according to one aspect of the present disclosure, by causing the left front image, which is the captured image of the left front of the vehicle captured by the front camera of the vehicle, to be displayed on the right display together with the right rear image when the vehicle is making a right turn at an intersection, the driver can check necessary information on a single screen and can reduce eye movements. Also, by displaying a combination of images from multiple directions, the driver can efficiently grasp the surrounding situation, and the load of the driver's confirmation work can be reduced.

The vehicle periphery image display apparatus according to one aspect of the present disclosure may further include a moving object detection unit that detects a moving object around the vehicle. The image display unit may, when the vehicle is making a right turn at an intersection, increase the display area of the captured image of the right rear of the vehicle on the right display when a moving object is detected at the right rear of the vehicle, as compared to when no moving object is detected at the right rear of the vehicle.

In the vehicle periphery image display apparatus according to one aspect of the present disclosure, it may be determined that the vehicle is making a right turn at an intersection when the right direction indicator light of the vehicle is in an activated state and the vehicle speed of the vehicle is less than a slow-speed determination threshold value.

Another aspect of the present disclosure is a vehicle periphery image display apparatus that displays a left rear image, which is a captured image from a left rear camera that captures the left rear of a vehicle, on a display in a vehicle cabin. The vehicle periphery image display apparatus includes a left display provided in front of the driver's seat of the vehicle in the vehicle cabin and provided on the left side as viewed from the driver at the driver's seat, and an image display unit that causes the left rear image to be displayed on the left display. The image display unit causes a right front image, which is a captured image of the right front of the vehicle captured by a front camera of the vehicle, to be displayed on the left display together with the left rear image when the vehicle is making a left turn at an intersection.

According to the vehicle periphery image display apparatus according to another aspect of the present disclosure, by causing the right front image, which is the captured image of the right front of the vehicle captured by the front camera of the vehicle, to be displayed on the left display together with the left rear image when the vehicle is making a left turn at an intersection, the driver can check necessary information on a single screen and can reduce eye movements. Also, by displaying a combination of images from multiple directions, the driver can efficiently grasp the surrounding situation, and the load of the driver's confirmation work can be reduced.

The vehicle periphery image display apparatus according to another aspect of the present disclosure may further include a moving object detection unit that detects a moving object around the vehicle. The image display unit may, when the vehicle is making a left turn at an intersection, increase the display area of the captured image of the left rear of the vehicle on the left display when a moving object is detected at the left rear of the vehicle, as compared to when no moving object is detected at the left rear of the vehicle.

In the vehicle periphery image display apparatus according to another aspect of the present disclosure, it may be determined that the vehicle is making a left turn at an intersection when the left direction indicator light of the vehicle is in an activated state and the vehicle speed of the vehicle is less than a slow-speed determination threshold value.

Still another aspect of the present disclosure is an image display method for a vehicle periphery image display apparatus that displays a right rear image, which is a captured image from a right rear camera that captures the right rear of a vehicle, on a display in a vehicle cabin. In this image display method, the right rear image is caused to be displayed on a right display provided in front of the driver's seat of the vehicle in the vehicle cabin and provided on the right side as viewed from the driver at the driver's seat, and when the vehicle is making a right turn at an intersection, a left front image, which is a captured image of the left front of the vehicle captured by a front camera of the vehicle, is caused to be displayed on the right display together with the right rear image.

According to the image display method for a vehicle periphery image display apparatus according to still another aspect of the present disclosure, by causing the left front image, which is the captured image of the left front of the vehicle captured by the front camera of the vehicle, to be displayed on the right display together with the right rear image when the vehicle is making a right turn at an intersection, the driver can check necessary information on a single screen and can reduce eye movements. Also, by displaying a combination of images from multiple directions, the driver can efficiently grasp the surrounding situation, and the load of the driver's confirmation work can be reduced.

Still another aspect of the present disclosure is an image display method for a vehicle periphery image display apparatus that displays a left rear image, which is a captured image from a left rear camera that captures the left rear of a vehicle, on a display in a vehicle cabin. In this image display method, the left rear image is caused to be displayed on a left display provided in front of the driver's seat of the vehicle in the vehicle cabin and provided on the left side as viewed from the driver at the driver's seat, and when the vehicle is making a left turn at an intersection, a right front image, which is a captured image of the right front of the vehicle captured by a front camera of the vehicle, is caused to be displayed on the left display together with the left rear image.

According to the image display method for a vehicle periphery image display apparatus according to still another aspect of the present disclosure, by causing the right front image, which is the captured image of the right front of the vehicle captured by the front camera of the vehicle, to be displayed on the left display together with the left rear image when the vehicle is making a left turn at an intersection, the driver can check necessary information on a single screen and can reduce eye movements. Also, by displaying a combination of images from multiple directions, the driver can efficiently grasp the surrounding situation, and the load of the driver's confirmation work can be reduced.

According to each aspect of the present disclosure, it is possible to reduce the load of the driver's confirmation work when making a right turn or a left turn at an intersection.

### BRIEF DESCRIPTION OF THE DRAWINGS

FIG. 1 is a block diagram showing a vehicle periphery image display apparatus according to one embodiment.
FIG. 2 is a diagram for explaining a driver's confirmation situation when making a right turn at an intersection.
FIG. 3 is a plan view showing an example of a situation where a host vehicle is making a right turn at an intersection.
FIG. 4 is a diagram for explaining an example of a composite image when making a right turn at an intersection when a two wheeled vehicle is present on the right rear side of the host vehicle.
FIG. 5 is a diagram for explaining an example of a composite image when making a right turn at an intersection when no moving object is present on the right rear side of the host vehicle.
FIG. 6 is a plan view showing an example of a traveling situation of a host vehicle making a left turn at an intersection.
FIG. 7 is a diagram for explaining an example of a composite image when making a left turn at an intersection.
FIG. 8 is a flowchart showing an example of a vehicle periphery image display process in the vehicle periphery image display apparatus.
FIG. 9 is a flowchart showing a continuation of the vehicle periphery image display process.

### DETAILED DESCRIPTION

Hereinafter, embodiments of the present disclosure will be described with reference to the drawings.

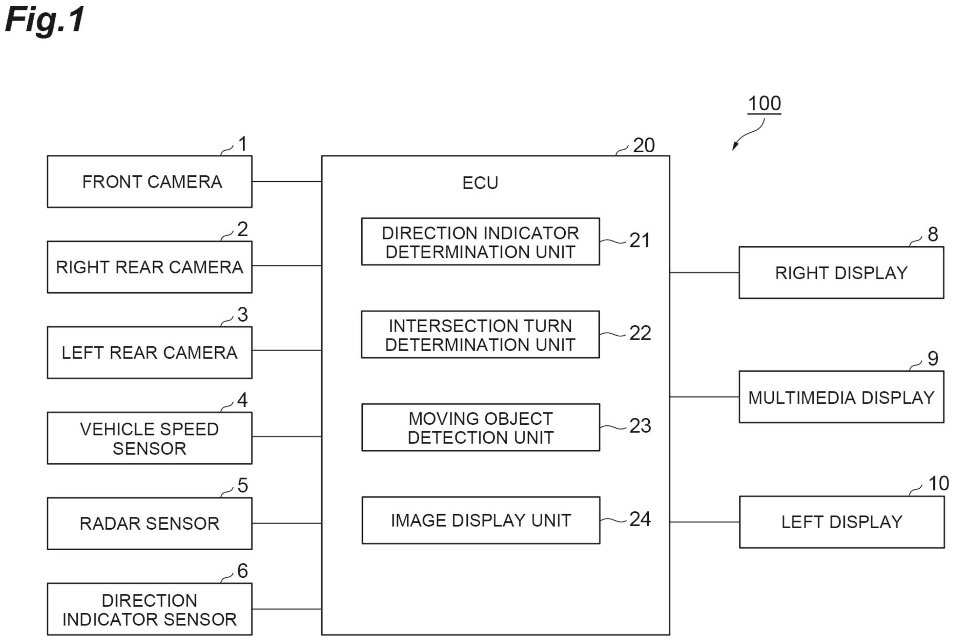

FIG. 1 is a block diagram showing a vehicle periphery image display apparatus 100 according to one embodiment. The vehicle periphery image display apparatus 100 shown in FIG. 1 is an apparatus that is mounted on a vehicle such as a passenger car or a freight vehicle (hereinafter referred to as a host vehicle) and displays captured images of the periphery of the host vehicle to a driver. The vehicle periphery image display apparatus 100 may have a configuration including a digital outer mirror. Note that the host vehicle may be an autonomous driving vehicle having an autonomous driving function. In the case of an autonomous driving vehicle, a user seated in a seat from which the periphery of the host vehicle can be monitored corresponds to the driver. Hereinafter, a case of traveling in a country or region with left-hand traffic will be described as an example. The case of right-hand traffic will be described later.

### [Configuration of Vehicle Periphery Image Display Apparatus]

The vehicle periphery image display apparatus 100 includes a front camera 1 that captures an image of the front of the host vehicle, a right rear camera 2 that captures an image of the right rear of the host vehicle, a left rear camera 3 that captures an image of the left rear of the host vehicle, a vehicle speed sensor 4 that detects vehicle speed, a radar sensor 5, a direction indicator sensor 6, a right display (right-side display) 8, a multimedia display 9, a left display (left-side display) 10, and an ECU 20 that controls these components.

The front camera 1 is a camera for capturing an image of the front of the host vehicle. The front camera 1 is installed on the front grille or at the top of the windshield of the host vehicle and is provided with a lens having a wide viewing angle. The front camera 1 captures obstacles, other vehicles, pedestrians, and the like in the traveling direction of the host vehicle and transmits the video thereof to the ECU 20. The video from the front camera 1 is used by the driver to check the situation in front when making a right or left turn at an intersection.

The right rear camera 2 is a camera for capturing an image of the right rear of the host vehicle. The right rear camera 2 is installed on the right side-view mirror or the right side of the rear bumper of the host vehicle and is provided with a lens having a wide viewing angle. The right rear camera 2 captures obstacles, other vehicles, two wheeled vehicles, and the like at the right rear of the host vehicle and transmits the video thereof to the ECU 20. Specifically, the video from the right rear camera 2 is used by the driver to check the situation at the right rear when making a right turn at an intersection.

The left rear camera 3 is a camera for capturing an image of the left rear of the host vehicle. The left rear camera 3 is installed on the left side-view mirror or the left side of the rear bumper of the host vehicle and is provided with a lens having a wide viewing angle. The left rear camera 3 captures obstacles, other vehicles, two wheeled vehicles, and the like at the left rear of the host vehicle and transmits the video thereof to the ECU 20. Specifically, the video from the left rear camera 3 is used by the driver to check the situation at the left rear when making a left turn at an intersection. The right rear camera 2 and the left rear camera 3 may function as cameras for a digital outer mirror.

The vehicle speed sensor 4 is a sensor for detecting the vehicle speed of the host vehicle. The vehicle speed sensor 4 calculates the vehicle speed by, for example, using a magnetic sensor or an optical sensor attached to a wheel of the host vehicle to measure the number of rotations of the wheel. A signal from the vehicle speed sensor 4 is transmitted to the ECU 20 and used as vehicle speed information of the host vehicle.

The radar sensor 5 is a sensor for detecting an object existing around the host vehicle. The radar sensor 5 transmits radio waves and receives the reflected waves thereof, thereby measuring the distance to the object and the relative speed. The radar sensor 5 can include a millimeter wave radar or LiDAR [Light Detection and Ranging]. The detection result of the radar sensor 5 is transmitted to the ECU 20 and used, for example, to detect a moving object such as a two wheeled vehicle or a pedestrian existing at the right rear or left rear of the host vehicle.

The direction indicator sensor 6 is a sensor for detecting the activated state and activated direction of the direction indicator light of the host vehicle. The direction indicator sensor 6 monitors the state of the switch of the direction indicator light, detects whether or not the direction indicator light of the host vehicle is in operation, and also detects whether the direction indicator light is operating in the right direction or the left direction. The direction indicator sensor 6 transmits data regarding the activated state and activated direction to the ECU 20.

The right display 8 is a display device provided in the vehicle cabin in front of the driver's seat and installed on the right side as viewed from the driver at the driver's seat. The right side as viewed from the driver includes not only a case where the entirety is located on the right side as viewed from the driver, but also a case where, even if a part is located in front of the driver, its center is on the right side of the driver's front. The right display 8 is used to display a right rear image RRI from the right rear camera 2. The right rear image RRI will be described later.

The multimedia display 9 is a display device installed in the vehicle cabin in front of the driver's seat and is used to display various multimedia contents such as a navigation system, an audio system, and vehicle information. The multimedia display 9 functions as an interface for providing visual information to the occupants of the host vehicle. The multimedia display 9 is provided, for example, in the center of the dashboard (on the left side as viewed from the driver) and corresponds to a center display.

The left display 10 is a display installed in the vehicle cabin in front of the driver's seat and on the left side as viewed from the driver at the driver's seat. The left side as viewed from the driver includes not only a case where the entirety is located on the left side as viewed from the driver, but also a case where, even if a part is located in front of the driver, its center is on the left side of the driver's front. The left display 10 is used to display a left rear image LRI from the left rear camera 3. Note that the vehicle periphery image display apparatus 100 does not need to be provided with both the multimedia display 9 and the left display 10, and may be an aspect provided with only one of them.

Next, the functional configuration of the ECU 20 will be described. The ECU 20 is an electronic control unit having a central processing unit (CPU) and a storage unit. The storage unit is composed of, for example, a read only memory (ROM), a random access memory (RAM), an Electrically Erasable Programmable Read-Only Memory (EEPROM), and the like. In the ECU 20, for example, various functions are realized by the CPU executing a program stored in the storage unit. The ECU 20 may be composed of a plurality of electronic units. As shown in FIG. 1, the ECU 20 has a direction indicator determination unit 21, an intersection turn determination unit 22, a moving object detection unit 23, and an image display unit 24.

The direction indicator determination unit 21 determines the activated state of the direction indicator light of the host vehicle based on a signal from the direction indicator sensor 6. Specifically, the direction indicator sensor 6 detects the state of the switch of the direction indicator light and transmits that information to the direction indicator determination unit 21. The direction indicator determination unit 21 determines whether the direction indicator light is activated based on this information. When the direction indicator light is activated, the direction indicator determination unit 21 determines which of the left and right direction indicator lights is activated.

The intersection turn determination unit 22 determines whether the host vehicle is about to make a right or left turn at an intersection. The intersection turn determination unit 22 determines a right or left turn of the host vehicle at an intersection based on the vehicle speed information from the vehicle speed sensor 4, for example, when it is determined by the direction indicator determination unit 21 that the direction indicator light is activated.

Specifically, when the direction indicator light is activated, the intersection turn determination unit 22 determines that the host vehicle is about to make a right or left turn at an intersection when the vehicle speed of the host vehicle is less than a slow-speed determination threshold value. The intersection turn determination unit 22 determines a right or left turn of the host vehicle at an intersection based on the vehicle speed of the host vehicle during activation of the direction indicator light, because the host vehicle sufficiently reduces its speed when making a right or left turn at an intersection as compared to when the host vehicle performs a lane chang. The slow-speed determination threshold value is appropriately set as a threshold value of a value that takes into account the vehicle speed of the host vehicle when making a right or left turn at an intersection. Note that the distinction between a right turn and a left turn is determined according to the activated direction of the direction indicator light.

The intersection turn determination unit 22 may perform the determination without using vehicle speed information. The intersection turn determination unit 22 may determine whether the host vehicle is about to make a right or left turn at an intersection from the captured image of the front camera 1 when it is determined by the direction indicator determination unit 21 that the direction indicator light is activated.

Specifically, the intersection turn determination unit 22 identifies a road area in the captured image by, for example, distinguishing a road area and a non-road area using an edge detection algorithm or a segmentation algorithm on the captured image of the front camera 1. The intersection turn determination unit 22 detects an intersection by applying a homography transformation to perform a viewpoint transformation and analyzing the road surface from a bird's-eye view. The intersection turn determination unit 22 may detect an intersection by identifying lane markers such as white lines and yellow lines by utilizing hue and saturation information in the captured image and finding a vanishing point from the extension of the lanes. The intersection turn determination unit 22 determines a right or left turn of the host vehicle at an intersection from the result of intersection detection from the captured image and the activation of the direction indicator light. Note that the intersection detection using the captured image is not limited to the above-described method, and various known methods can be adopted.

Alternatively, the intersection turn determination unit 22 may determine whether the host vehicle is about to make a right or left turn at an intersection from the determination result of the direction indicator determination unit 21 and the position information and map information of the host vehicle. The position information of the host vehicle can be acquired by a GNSS [Global Navigation Satellite System] or a GPS [Global Positioning System]. The intersection turn determination unit 22 determines that the host vehicle is about to make a right turn at an intersection, for example, when the host vehicle activates the right direction indicator light at a position before an intersection. The intersection turn determination unit 22 determines that the host vehicle is about to make a left turn at an intersection when the host vehicle activates the left direction indicator light at a position before an intersection.

Further, the intersection turn determination unit 22 may determine whether the host vehicle is about to make a right or left turn at an intersection based on the determination result of the direction indicator determination unit 21 and the navigation information of the navigation system of the host vehicle. The intersection turn determination unit 22 determines that the host vehicle will make a right or left turn at an intersection when the direction indicator light in the guided direction is activated at the timing when a right or left turn at an intersection is guided to reach a destination.

In addition, the intersection turn determination unit 22 can determine a right or left turn of the host vehicle at an intersection by a known method. Note that, instead of the determination result of the activated state of the direction indicator light by the direction indicator determination unit 21, it may be determined that the host vehicle is making a right or left turn when the steering angle or yaw rate of the host vehicle is equal to or greater than a threshold value.

The moving object detection unit 23 detects whether a moving object exists around the host vehicle based on the detection result of the radar sensor 5. A moving object is a movable object among objects that become an obstacle to the travel of the host vehicle.

The moving object may be a two wheeled vehicle such as a motorcycle, may be a personal mobility vehicle, or may be a pedestrian (for example, a running person). The personal mobility includes at least one of an electric kick scooter, a two-wheeled self-balancing electric mobility, an electric unicycle, an electric skateboard, electric roller skates, and an electric wheelchair. The term 'pedestrian' may include a person moving using a bicycle, a kick scooter, roller skates, a skateboard, or the like.

The moving object detection unit 23 may detect a moving object from the captured images of the front camera 1, the right rear camera 2, and the left rear camera 3 without using the radar sensor 5, or may detect a moving object by sensor fusion that combines the detection result of the radar sensor 5 and the captured images.

The image display unit 24 processes the captured images from the front camera 1, the right rear camera 2, and the left rear camera 3, and displays them on the screen of an appropriate display device among the right display 8, the multimedia display 9, and the left display 10. The image display unit 24 can, for example, as a digital outer mirror, display the captured image of the right rear camera 2 on the right display 8 and display the captured image of the left rear camera 3 on the left display 10.

The image display unit 24 may perform a narrow-angle field of view display of the right rear camera 2 on the right display 8 when the host vehicle is traveling straight, and may perform a wide-angle field of view display of the right rear camera 2 when the right direction indicator light of the host vehicle is activated. The narrow-angle field of view display is, for example, to display a digital outer mirror image with a narrow field of view that can satisfy the legal magnification in Japan. The wide-angle field of view display is to display a digital outer mirror image with a wider field of view compared to the narrow-angle field of view display. In the wide-angle field of view display, for example, it is possible to provide a display with a wide field of view that includes the boundary line of the adjacent lane on the side opposite the host vehicle, assuming a lane change by the host vehicle. Note that the narrow-angle field of view display does not necessarily need to satisfy the legal magnification in Japan, and may be a display with a magnification that satisfies the regulations of each country. The same can be applied to the display on the left display 10 by the left rear camera 3.

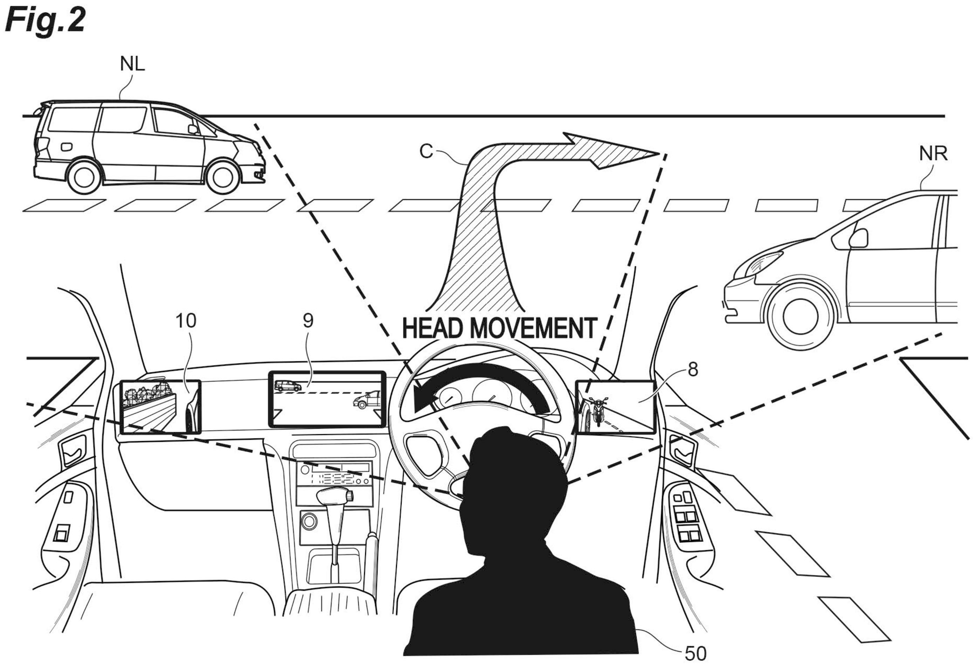

Here, FIG. 2 is a diagram for explaining a driver's confirmation situation when making a right turn at an intersection. FIG. 2 shows a driver 50, a course C of the host vehicle, another vehicle NR approaching from the right, another vehicle NL approaching from the left, a right display 8, a multimedia display 9, and a left display 10. FIG. 2 shows a situation where the host vehicle is making a right turn at a T-junction.

In FIG. 2, the driver 50 is sitting in the driver's seat, and the right display 8, the multimedia display 9, and the left display 10 are installed in the vehicle cabin. On the right display 8, a captured image of the right rear of the host vehicle by the right rear camera 2 is displayed, and the driver can check the situation at the right rear of the host vehicle.

On the multimedia display 9, a captured image of the front of the host vehicle by the front camera 1 is displayed, and the driver can check the situation in front of the host vehicle. On the multimedia display 9, the other vehicle NR approaching from the right and the other vehicle NL approaching from the left are displayed. Note that the multimedia display 9 does not necessarily need to display the captured image of the front of the host vehicle, and a navigation screen or other information may be displayed. On the left display 10, a captured image of the left rear of the host vehicle by the left rear camera 3 is displayed, and the driver can check the situation at the left rear of the host vehicle.

However, in the situation shown in FIG. 2, the driver 50 needs to visually check the right front of the host vehicle to confirm the presence of the other vehicle NR approaching from the right, visually check the right rear of the host vehicle via the right display 8 to confirm the presence or absence of other vehicles or the like that may be involved in a right turn, and visually check the left front of the host vehicle to confirm the presence of the other vehicle NL approaching from the left. For this reason, the driver 50 has been required to make large eye movements involving head movements as shown in FIG. 2 when making a right or left turn at an intersection.

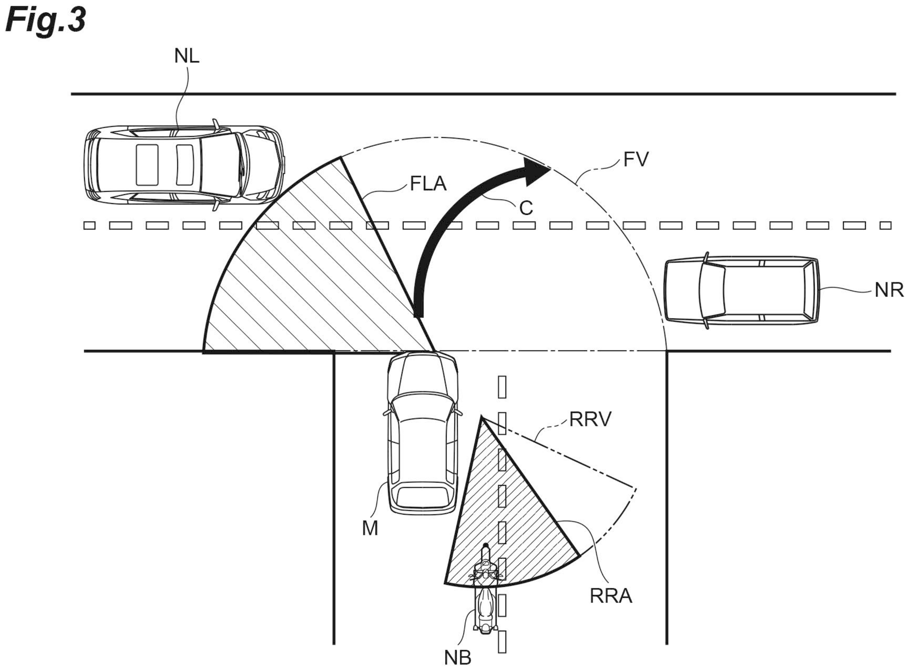

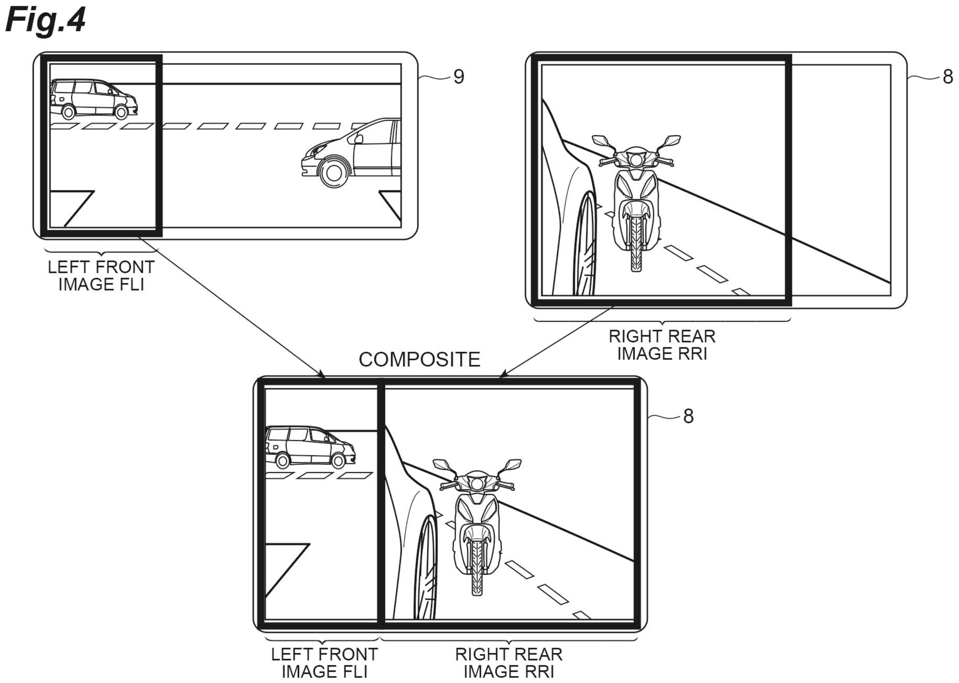

Therefore, in the image display unit 24 of the vehicle periphery image display apparatus 100 according to the present embodiment, the eye movements of the driver 50 are reduced by displaying a composite image of multiple directions. Here, an explanation will be given using FIG. 3 and FIG. 4. FIG. 3 is a plan view showing an example of a situation where a host vehicle is making a right turn at an intersection. FIG. 3 shows the situation of the host vehicle in FIG. 2 as a plan view.

FIG. 3 shows a host vehicle M, a course C of the host vehicle M, another vehicle NR approaching from the right, another vehicle NL approaching from the left, and a two wheeled vehicle NB approaching from the left rear. Also, a front capturing range FV of the front camera 1 of the host vehicle M, a left front area FLA in the front capturing range FV, a right rear capturing range RRV of the right rear camera 2 of the host vehicle M, and a close right rear area RRA in the right rear capturing range RRV are shown. In the situation shown in FIG. 3, the image display unit 24 reduces the eye movements of the driver 50 by displaying an image corresponding to the left front area FLA and an image corresponding to the close right rear area RRA together.

FIG. 4 is a diagram for explaining an example of a composite image when making a right turn at an intersection when a two wheeled vehicle is present on the right rear side of the host vehicle M. FIG. 4 shows a left front image FLI corresponding to the left front area FLA of the front camera 1, and a right rear image RRI corresponding to the close right rear area RRA of the right rear camera 2. The other vehicle NL is shown in the left front image FLI, and the two wheeled vehicle NB is shown in the right rear image RRI.

As shown in FIG. 4, the image display unit 24 displays a composite image combining the left front image FLI and the right rear image RRI on the right display 8 in the situation shown in FIG. 3. Here, since the two wheeled vehicle NB is shown in the right rear image RRI, the image display unit 24 makes the display area of the right rear image RRI larger than that of the left front image FLI.

Note that the image display unit 24 may set the ratio of the display area of the right rear image RRI to the display area of the left front image FLI to 5:5, or may set it to 6:4. The ratio of the display area may be adjustable to any ratio. An image other than the left front image FLI and the right rear image RRI may be displayed on the right display 8.

As a result, in a situation like that shown in FIG. 2 where the driver 50 is making a right turn at an intersection, by viewing the right display 8 provided at the right front of the driver in the vehicle cabin while looking at the right front, which is the traveling direction of the host vehicle M, the driver can confirm the situation of the other vehicle NL approaching from the left side of the host vehicle M and the situation of the two wheeled vehicle NB approaching from the right rear of the host vehicle M, so the eye movements of the driver 50 can be reduced. Note that in this case, it is not necessary to display an image of the front of the host vehicle M on the multimedia display 9. For example, a navigation screen or the like can be displayed.

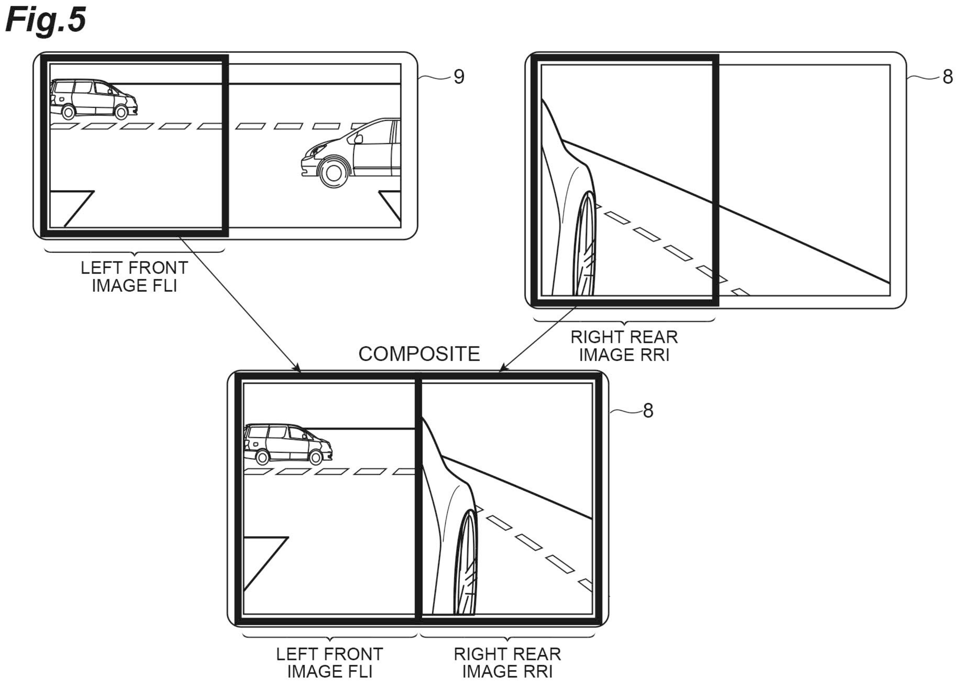

Also, the image display unit 24 changes the display area of each image based on the detection result of the moving object by the moving object detection unit 23. Here, FIG. 5 is a diagram for explaining an example of a composite image when making a right turn at an intersection when no moving object is present on the right rear side of the host vehicle M. Specifically, FIG. 5 shows the state of image display on the right display 8 when no moving object was detected at the right rear of the host vehicle M when making a right turn at an intersection.

As shown in FIG. 5, when a moving object such as the two wheeled vehicle NB was not detected at the right rear of the host vehicle M, the image display unit 24 reduces the ratio of the display area of the right rear image RRI on the right display 8 compared to FIG. 4. Here, as an example, the image display unit 24 sets the ratio of the display area of the right rear image RRI to the display area of the left front image FLI to 5:5.

Similarly, the image display unit 24 may change the ratio of the display area of the left front image FLI depending on the presence or absence of detection of a moving object approaching from the left side of the host vehicle M. When a moving object approaching from the left side of the host vehicle M is detected by the moving object detection unit 23, the image display unit 24 increases the ratio of the display area of the left front image FLI compared to the case where a moving object approaching from the left side of the host vehicle M was not detected.

Note that, even when a moving object at the right rear of the host vehicle M is detected by the moving object detection unit 23, the image display unit 24 may be configured to increase the ratio of the display area of the right rear image RRI when the moving object is present at a position shown in the right rear image RRI. In this case, the image display unit 24 does not increase the ratio of the display area of the right rear image RRI even if the moving object is present at a position not shown in the right rear image RRI. The same can be applied to the left front image FLI.

The image display unit 24 may be configured to change the ratio of the display area in real time based on the detection result of the moving object detection unit 23. The image display unit 24 may perform an emphasis display of a moving object shown in the left front image FLI or the right rear image RRI. The image display unit 24 may display a frame line of a bright color (for example, a red or yellow frame line) around the moving object as the emphasis display. The image display unit 24 may display an icon indicating a two wheeled vehicle or a four wheeled vehicle near the moving object on the image as the emphasis display. The image display unit 24 may display the distance and vehicle speed of the moving object near the moving object on the image as the emphasis display.

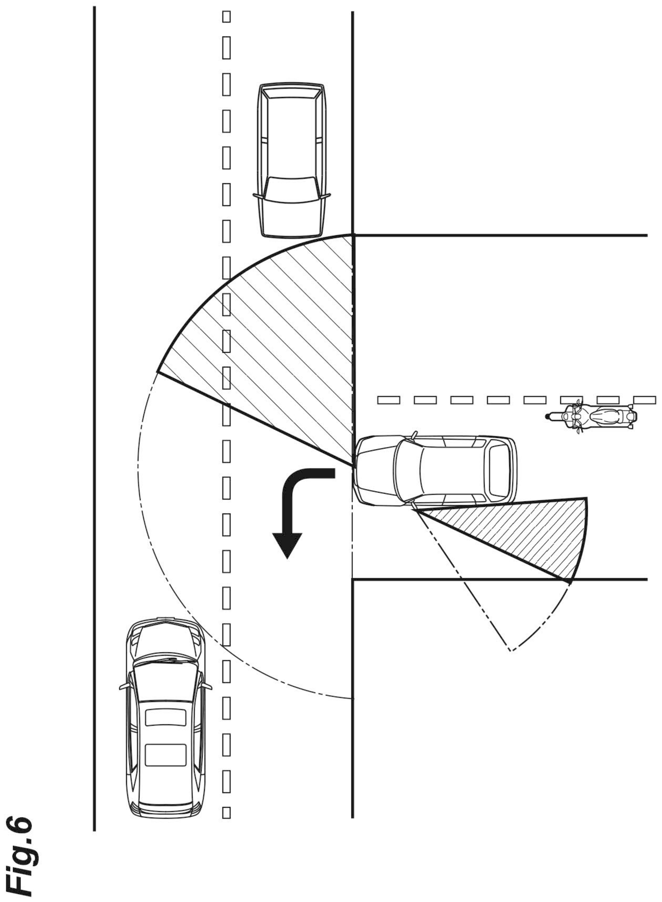

Next, a case where the host vehicle M makes a left turn at an intersection will be described. FIG. 6 is a plan view showing an example of a traveling situation of the host vehicle M making a left turn at an intersection. FIG. 6 shows a right front area FRA in the front capturing range FV of the front camera 1 of the host vehicle M, a left rear capturing range RLV of the left rear camera 3 of the host vehicle M, and a close left rear area RLA in the left rear capturing range RLV. The same components as in FIG. 3 are denoted by the same reference numerals, and a description thereof is omitted.

In FIG. 6, it is assumed that no moving object is detected at the left rear of the host vehicle M. Also, as shown in FIG. 6, in a country or region with left-hand traffic, since the traveling space for a two wheeled vehicle or the like to enter on the left side of the host vehicle often becomes narrow, the left rear capturing range RLV may be a range with a narrower angle than the right rear capturing range RRV shown in FIG. 3. Similarly, the close left rear area RLA may be a range with a narrower angle than the close right rear area RRA shown in FIG. 3.

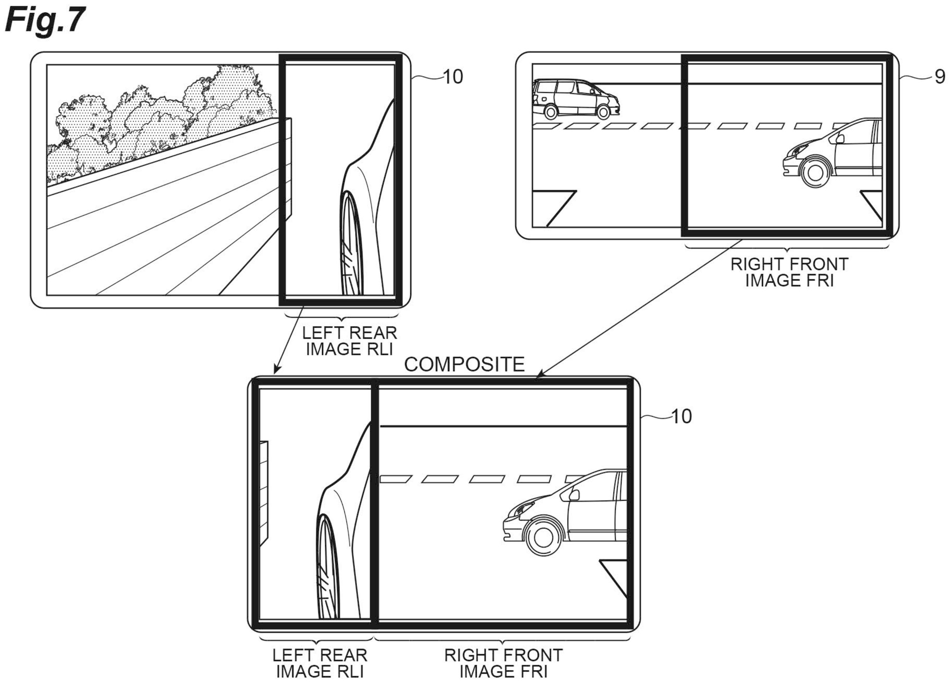

FIG. 7 is a diagram for explaining an example of a composite image when making a left turn at an intersection. FIG. 7 shows a right front image FRI corresponding to the right front area FRA of the front camera 1, and a left rear image RLI corresponding to the close left rear area RLA of the left rear camera 3. The other vehicle NR is shown in the right front image FRI. No moving object is shown in the right rear image RRI.

As shown in FIG. 7, the image display unit 24 displays a composite image combining the right front image FRI and the left rear image RLI on the left display 10 in the situation shown in FIG. 6. Here, since the other vehicle NR is shown in the right front image FRI and the two wheeled vehicle NB is not shown in the left rear image RLI, the image display unit 24 makes the display area of the right front image FRI larger than that of the left rear image RLI. Note that the image display unit 24 may set the ratio of the display area of the left rear image RLI to the display area of the right front image FRI to 5:5, or may set it to 6:4. The ratio of the display area may be adjustable to any ratio. It may be an aspect in which the size of the area is adjusted instead of the ratio by providing a margin or the like.

As a result, in a situation like that of FIG. 6 where the driver 50 is making a left turn at an intersection, by viewing the left display 10 provided at the left front of the driver in the vehicle cabin while looking at the left front, which is the traveling direction of the host vehicle M, the driver can confirm the situation of the other vehicle NR approaching from the right side of the host vehicle M and the presence or absence of a moving object approaching from the left rear of the host vehicle M, so the eye movements of the driver 50 can be reduced. Note that the image display unit 24 may display the composite image on the multimedia display 9 (a display device located on the left side as viewed from the driver) instead of the left display 10.

Also, similarly to the case of a right turn at an intersection, the image display unit 24 may change the ratio of the display area of each image based on the detection result of the moving object by the moving object detection unit 23. For example, when a moving object such as the other vehicle NL is not detected at the left front of the host vehicle M, the image display unit 24 reduces the ratio of the display area of the right front image FRI on the left display 10 compared to FIG. 7. Similarly, when a moving object is detected at the left rear of the host vehicle M, the image display unit 24 may increase the ratio of the display area of the left rear image RLI on the left display 10 compared to FIG. 7 where no moving object is detected. The same can be applied to the emphasis display.

[Image Display Method of Vehicle Periphery Image Display Apparatus]

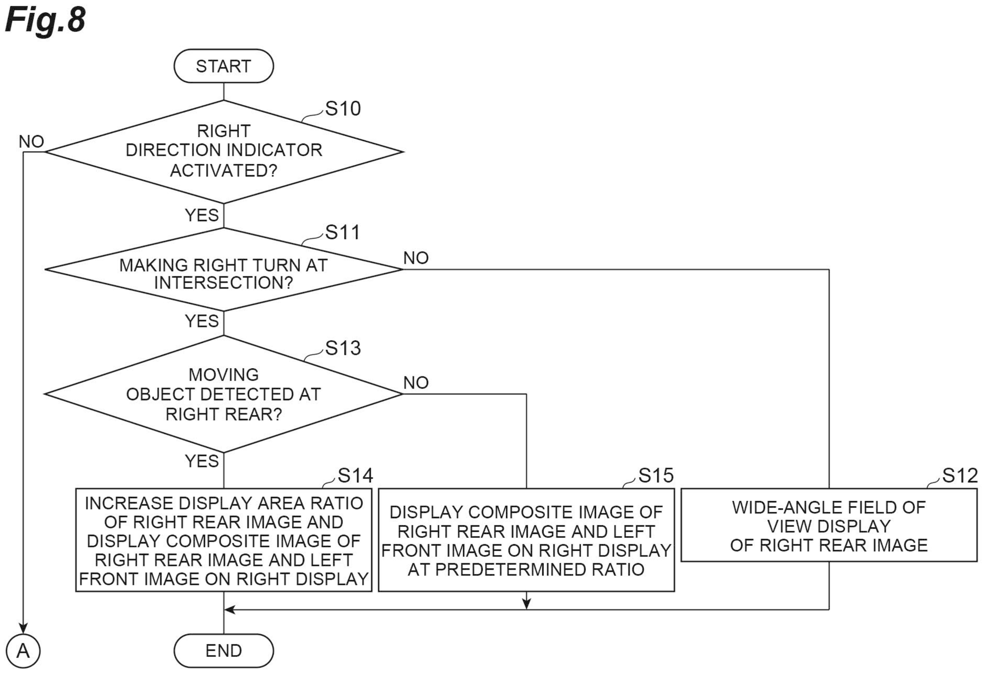

Next, an image display method of the vehicle periphery image display apparatus 100 according to the present embodiment will be described with reference to the drawings. FIG. 8 is a flowchart showing an example of a vehicle periphery image display process in the vehicle periphery image display apparatus 100. FIG. 8 shows the flow of the image display process when making a right turn at an intersection.

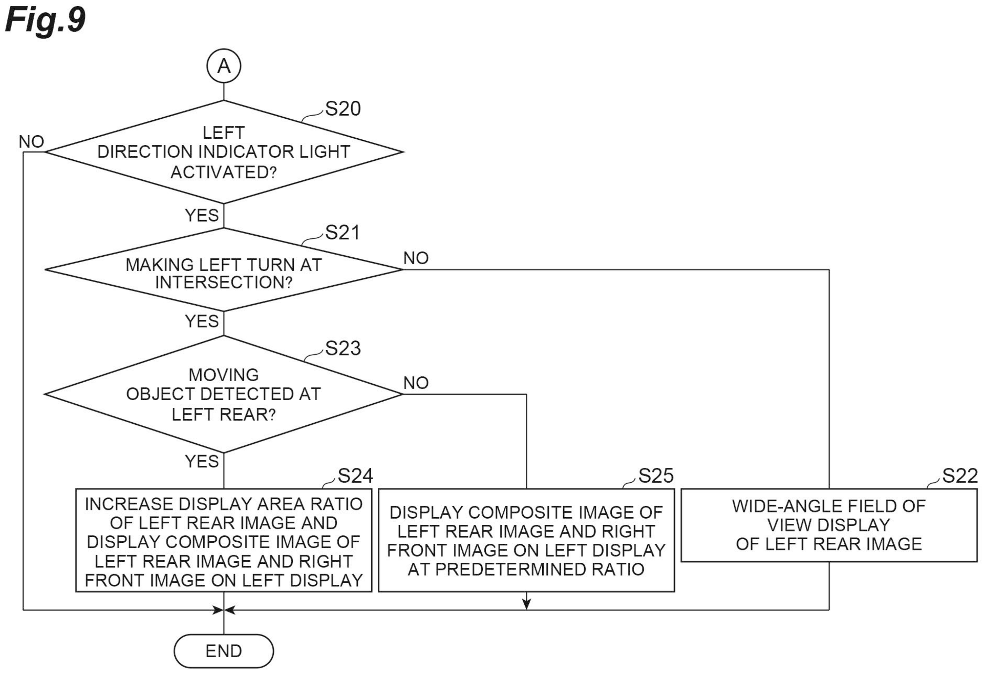

As shown in FIG. 8, the ECU 20 of the vehicle periphery image display apparatus 100 first, as step S10, determines whether the right direction indicator light is activated by the direction indicator determination unit 21. Specifically, the direction indicator sensor 6 detects whether the switch of the right direction indicator light is turned on, and transmits that information to the direction indicator determination unit 21. If the right direction indicator light is not activated, the ECU 20 proceeds to step S20 in FIG. 9. On the other hand, if the right direction indicator light is activated, the ECU 20 proceeds to step S11.

In step S11, the ECU 20 determines whether the host vehicle is about to make a right turn at an intersection by the intersection turn determination unit 22. The intersection turn determination unit 22 determines that the host vehicle is about to make a right turn at an intersection, for example, when the vehicle speed of the host vehicle detected by the vehicle speed sensor 4 is less than a slow-speed determination threshold value. If it is not determined that the host vehicle is about to make a right turn at an intersection, the ECU 20 proceeds to step S12. If it is determined that the host vehicle is about to make a right turn at an intersection, the ECU 20 proceeds to step S13.

In step S12, the ECU 20 causes the image display unit 24 to perform a wide-angle field of view display of the right rear image captured by the right rear camera 2 on the right display 8. The right rear image in this case may be different from or the same as the right rear image RRI in FIG. 4. As the wide-angle field of view display, for example, an image of a range as shown in the right display 8 in the upper right of FIG. 4 can be displayed. Thereafter, the ECU 20 terminates the current process.

In step S13, the ECU 20 determines whether a moving object has been detected at the right rear of the host vehicle by the moving object detection unit 23. The moving object detection unit 23, for example, analyzes the reflected wave of the radio wave transmitted by the radar sensor 5 and detects a moving object at the right rear of the host vehicle M. If a moving object is detected, the ECU 20 proceeds to step S14. If no moving object is detected, the ECU 20 proceeds to step S15.

In step S14, the ECU 20 causes the image display unit 24 to display a composite image combining the left front image FLI of the front camera 1 and the right rear image RRI of the right rear camera 2 on the right display 8. This allows the driver 50 to check necessary information on a single display when making a right turn at an intersection, and to minimize eye movements. Also, in step S14, the ratio of the display area of the right rear image RRI is increased. This makes it easier for the driver 50 to pay attention to a moving object approaching from the right rear of the host vehicle M, and to avoid colliding with the moving object when the host vehicle M makes a right turn. Thereafter, the ECU 20 terminates the current process.

In step S15, the ECU 20 causes the image display unit 24 to display a composite image combining the left front image FLI of the front camera 1 and the right rear image RRI of the right rear camera 2 on the right display 8. In step S15, the left front image FLI and the right rear image RRI are caused to be displayed on the right display 8 at a predetermined ratio. The predetermined ratio may be 5:5 or 4:6. Thereafter, the ECU 20 terminates the current process.

Next, FIG. 9 is a flowchart showing a continuation of the vehicle periphery image display process. FIG. 9 shows the flow of the image display process when making a left turn at an intersection. The process shown in FIG. 9 is executed when it is not determined in step S10 of FIG. 8 that the right direction indicator light is activated.

As shown in FIG. 9, the ECU 20, as step S20, determines whether the left direction indicator light is activated by the direction indicator determination unit 21. If the left direction indicator light is not activated, the ECU 20 terminates the current process. On the other hand, if the left direction indicator light is activated, the ECU 20 proceeds to step S21.

In step S21, the ECU 20 determines whether the host vehicle is about to make a left turn at an intersection by the intersection turn determination unit 22. The intersection turn determination unit 22 determines that the host vehicle is about to make a left turn at an intersection, for example, when the vehicle speed of the host vehicle detected by the vehicle speed sensor 4 is less than a slow-speed determination threshold value. If it is not determined that the host vehicle is about to make a left turn at an intersection, the ECU 20 proceeds to step S22. If it is determined that the host vehicle is about to make a left turn at an intersection, the ECU 20 proceeds to step S23.

In step S22, the ECU 20 causes the image display unit 24 to perform a wide-angle field of view display of the left rear image captured by the left rear camera 3 on the left display 10. The left rear image in this case may be different from or the same as the left rear image RLI in FIG. 7. As the wide-angle field of view display, for example, an image of a range as shown in the left display 10 in the upper left of FIG. 7 can be displayed. Thereafter, the ECU 20 terminates the current process.

In step S23, the ECU 20 determines whether a moving object has been detected at the left rear of the host vehicle by the moving object detection unit 23. If a moving object is detected, the ECU 20 proceeds to step S24. If no moving object is detected, the ECU 20 proceeds to step S25.

In step S24, the ECU 20 causes the image display unit 24 to display a composite image combining the right front image FRI of the front camera 1 and the left rear image RLI of the left rear camera 3 on the left display 10. This allows the driver 50 to check necessary information on a single display when making a left turn at an intersection, and to minimize eye movements. Also, in step S24, the ratio of the display area of the left rear image RLI is increased. This makes it easier for the driver 50 to pay attention to a moving object approaching from the left rear of the host vehicle M, and to avoid colliding with the moving object when the host vehicle M makes a left turn. Thereafter, the ECU 20 terminates the current process.

In step S25, the ECU 20 causes the image display unit 24 to display a composite image combining the right front image FRI of the front camera 1 and the left rear image RLI of the left rear camera 3 on the left display 10. In step S25, the right front image FRI and the left rear image RLI are caused to be displayed on the left display 10 at a predetermined ratio. The predetermined ratio may be 5:5 or 4:6. Thereafter, the ECU 20 terminates the current process.

According to the vehicle periphery image display apparatus 100 of the present embodiment described above, by causing the left front image FLI captured by the front camera 1 of the host vehicle M to be displayed on the right display 8 together with the right rear image RRI when the host vehicle M is making a right turn at an intersection, the driver 50 can check necessary information on a single screen and can reduce eye movements. Also, by displaying a combination of images from multiple directions, the driver 50 can efficiently grasp the surrounding situation, and the load of the driver's confirmation work can be reduced.

Also, according to the vehicle periphery image display apparatus 100, when making a right turn at an intersection, if a moving object is detected at the right rear, by increasing the display area of the right rear image RRI, the driver 50 can effectively acquire necessary information, and visual information processing becomes easier.

Furthermore, according to the vehicle periphery image display apparatus 100, by determining that the host vehicle M is making a right turn at an intersection when the right direction indicator light of the host vehicle M is in an activated state and the vehicle speed is less than the slow-speed determination threshold value, the right turn action at an intersection by the driver 50 can be accurately detected. The above effects can also be obtained similarly when making a left turn at an intersection.

Although the embodiments of the present disclosure have been described above, the present disclosure is not limited to the above-described embodiments. The present disclosure can be implemented in various forms with various changes and improvements made based on the knowledge of those skilled in the art, including the above-described embodiments.

In the above embodiment, the display of the composite image corresponding to both the right turn and the left turn at an intersection has been described, but it may be an aspect in which the composite image is displayed only in either the case of a right turn at an intersection or the case of a left turn at an intersection. Also, in the above embodiment, the case of a country or region with left-hand traffic has been described as an example, but the present disclosure is also applicable to a country or region with right-hand traffic.

The vehicle periphery image display apparatus 100 does not necessarily need to change the ratio of the display area in the composite image according to the detection result of the moving object. The vehicle periphery image display apparatus 100 may be an aspect that displays a composite image of the right rear image RRI and the left front image FLI at a predetermined ratio regardless of the presence or absence of a moving object. The same applies to the case of a composite image of the right front image FRI and the left rear image RLI.

The vehicle periphery image display apparatus 100 does not need to be provided with the left display 10 when the multimedia display 9 functions as a display device located on the left side of the driver. Also, at least one of the right display 8, the multimedia display 9, and the left display 10 may be a head-up display. A display area located on the right side of the driver in the head-up display may be treated as the right display 8, and a display area located on the left side of the driver may be treated as the left display 10.

The vehicle periphery image display apparatus 100 may change the ratio of the display area of the composite image according to the visual confirmation status of the driver 50 when making a right or left turn at an intersection. The vehicle periphery image display apparatus 100 may be configured such that, when making a right turn at an intersection, if the driver 50 has visually confirmed the left front of the host vehicle M, the ratio of the display area of the left front image FLI is not increased for a certain period of time after the driver 50 has visually confirmed the left front, even if a moving object exists at the left front. Alternatively, the vehicle periphery image display apparatus 100 may be configured such that, when the driver 50 has visually confirmed the left front of the host vehicle M, the left front image FLI is not displayed as a composite image on the right display 8 for a certain period of time after the driver 50 has visually confirmed the left front. Similarly, the vehicle periphery image display apparatus 100 may be configured such that, when making a left turn at an intersection, if the driver 50 has visually confirmed the right front of the host vehicle M, the ratio of the display area of the right front image FRI is not increased for a certain period of time after the driver 50 has visually confirmed the right front, even if a moving object exists at the right front. The vehicle periphery image display apparatus 100 may be configured such that, when the driver 50 has visually confirmed the right front of the host vehicle M, the right front image FRI is not displayed as a composite image on the left display 10 for a certain period of time after the driver 50 has visually confirmed the right front.

## Claims

1. A vehicle periphery image display apparatus that displays a right rear image (RRI), which is a captured image from a right rear camera (2) that captures a right rear of a vehicle, on a display in a vehicle cabin, the apparatus comprising:
a right display (8) provided in the vehicle cabin in front of a driver's seat of the vehicle and provided on a right side as viewed from a driver at the driver's seat; and
an image display unit (24) configured to cause the right rear image (RRI) to be displayed on the right display (8),
wherein the image display unit (24) is configured to, when the vehicle is making a right turn at an intersection, cause a left front image (FLI), which is a captured image of a left front of the vehicle captured by a front camera (1) of the vehicle, to be displayed on the right display (8) together with the right rear image (RRI).

2. The vehicle periphery image display apparatus according to claim 1, further comprising a moving object detection unit (23) configured to detect a moving object around the vehicle,
wherein the image display unit (24) is configured to, when the vehicle is making a right turn at an intersection, increase a display area of the captured image of the right rear of the vehicle on the right display (8) when the moving object is detected at the right rear of the vehicle, as compared to a case where the moving object is not detected at the right rear of the vehicle.

3. The vehicle periphery image display apparatus according to claim 1 or 2, wherein the apparatus is configured to determine that the vehicle is making a right turn at an intersection when a right direction indicator light of the vehicle is in an activated state and a vehicle speed of the vehicle is less than a slow-speed determination threshold value.

4. A vehicle periphery image display apparatus that displays a left rear image (RLI), which is a captured image from a left rear camera (3) that captures a left rear of a vehicle, on a display in a vehicle cabin, the apparatus comprising:
a left display (10) provided in the vehicle cabin in front of a driver's seat of the vehicle and provided on a left side as viewed from a driver at the driver's seat; and
an image display unit (24) configured to cause the left rear image (RLI) to be displayed on the left display (10),
wherein the image display unit (24) is configured to, when the vehicle is making a left turn at an intersection, cause a right front image (FRI), which is a captured image of a right front of the vehicle captured by a front camera (1) of the vehicle, to be displayed on the left display (10) together with the left rear image (RLI).

5. The vehicle periphery image display apparatus according to claim 4, further comprising a moving object detection unit (23) configured to detect a moving object around the vehicle,
wherein the image display unit (24) is configured to, when the vehicle is making a left turn at an intersection, increase a display area of the captured image of the left rear of the vehicle on the left display (10) when the moving object is detected at the left rear of the vehicle, as compared to a case where the moving object is not detected at the left rear of the vehicle.

6. The vehicle periphery image display apparatus according to claim 4 or 5, wherein the apparatus is configured to determine that the vehicle is making a left turn at an intersection when a left direction indicator light of the vehicle is in an activated state and a vehicle speed of the vehicle is less than a slow-speed determination threshold value.

7. An image display method for a vehicle periphery image display apparatus that displays a right rear image (RRI), which is a captured image from a right rear camera (2) that captures a right rear of a vehicle, on a display in a vehicle cabin, the method comprising:
causing the right rear image (RRI) to be displayed on a right display (8) provided in the vehicle cabin in front of a driver's seat of the vehicle and provided on a right side as viewed from a driver at the driver's seat; and
when the vehicle is making a right turn at an intersection, causing a left front image (FLI), which is a captured image of a left front of the vehicle captured by a front camera (1) of the vehicle, to be displayed on the right display (8) together with the right rear image (RRI).

8. An image display method for a vehicle periphery image display apparatus that displays a left rear image (RLI), which is a captured image from a left rear camera (3) that captures a left rear of a vehicle, on a display in a vehicle cabin, the method comprising:
causing the left rear image (RLI) to be displayed on a left display (10) provided in the vehicle cabin in front of a driver's seat of the vehicle and provided on a left side as viewed from a driver at the driver's seat; and
when the vehicle is making a left turn at an intersection, causing a right front image (FRI), which is a captured image of a right front of the vehicle captured by a front camera (1) of the vehicle, to be displayed on the left display (10) together with the left rear image (RLI).
